# FASCICULE DE BREVET EUROPEEN

(11) **EP 3 577 395 B1**
(45) Date de publication et mention de la délivrance du brevet: **17.02.2021**
(21) Numéro de dépôt: 18705697.3
(22) Date de dépôt: 31.01.2018
(51) Int. Cl.: F24H 9/20, F24D 19/10, G05D 23/19, F24H 1/00, G05D 23/24, H05B 1/02

(54) **DISPOSITIF DE CHAUFFAGE ÉLECTRIQUE, CIRCUIT DE CHAUFFAGE ET PROCÉDÉ DE GESTION DE LA TEMPÉRATURE CORRESPONDANTS**
ELEKTRISCHE HEIZVORRICHTUNG, HEIZKREIS UND VERFAHREN ZUR STEUREUNG DER ENTSPRECHENDEN TEMPERATUREN
ELECTRIC HEATING ARRANGEMENT, HEATING CIRCUIT AND METHOD OF CONTROL OF THE CORRESPONDING TEMPERATURES

(30) Priorité: 06.02.2017 FR 1750960
(43) Date de publication de la demande: 11.12.2019
(73) Titulaire: Valeo Systemes Thermiques, 78322 Le Mesnil Saint-Denis Cedex (FR)
(72) Inventeur: PIERRON, Frédéric, 78322 Le Mesnil Saint-Denis Cedex (FR); TELLIER, Laurent, 78322 Le Mesnil Saint-Denis Cedex (FR)
(74) Mandataire: Tran, Chi-Hai
(86) Numéro de dépôt international: PCT/FR2018/050221
(87) Numéro de publication internationale: WO 2018/142064

(56) Documents cités:
- WO-A1-97/46928
- DE-T5-112014 006 219
- FR-A1- 3 002 493
- FR-A1- 3 026 262
- US-A1- 2015 122 899

## Description

L'invention concerne un dispositif de chauffage électrique de fluide pour véhicule automobile. L'invention concerne aussi un circuit de chauffage comprenant un tel dispositif de chauffage. L'invention s'applique également aux appareils de chauffage et/ou de climatisation de véhicules automobiles comportant un tel dispositif de chauffage. L'invention concerne encore un procédé de gestion de la température d'un fluide au sein d'un tel dispositif de chauffage électrique.

Notamment dans le cas d'un véhicule électrique ou hybride, on peut prévoir un circuit de chauffage d'un fluide tel que du liquide caloporteur, pour le chauffage de l'habitacle. Un tel circuit de chauffage comporte généralement un dispositif de chauffage électrique aussi appelé réchauffeur ou réchauffeur électrique, qui permet de chauffer l'habitacle du véhicule, en apportant, par effet Joule, de la chaleur au liquide caloporteur du circuit de chauffage. Ce circuit de chauffage intègre de plus au moins un radiateur pour dissiper cette chaleur vers l'habitacle.

Le réchauffeur électrique comporte un ou plusieurs éléments chauffants destinés à être en contact avec le fluide à chauffer, tel que du liquide caloporteur.

Pour gérer la puissance thermique de réchauffage, un tel réchauffeur intègre généralement des composants d'électronique de puissance et de commande, pour injecter dans les éléments chauffants, une puissance électrique correspondant à une valeur de consigne adressée par une unité centrale du véhicule automobile équipé d'un tel réchauffeur. Pour les réchauffeurs actuels disponibles sur le marché, la température est gérée par le constructeur automobile et est généralement hors de contrôle du réchauffeur.

Selon une solution connue, un capteur de température est implémenté directement sur l'élément chauffant du réchauffeur pour le contrôle en température de l'élément chauffant. Généralement, un tel capteur est utilisé pour éviter la surchauffe ou une température anormale de l'élément chauffant. Autrement dit, le capteur de température est utilisé comme élément de détection d'un évènement particulier, comme une température excessive. Le réseau du véhicule peut interpréter cet évènement afin de désactiver l'élément chauffant ou les éléments chauffants en surchauffe. Cependant, cette information de température n'est pas utilisée au sein du réchauffeur afin de réguler la température du liquide circulant dans le réchauffeur. Le document FR 3 026 262 A1 montre un dispositif de chauffage selon le préambule de la revendication 1.

La présente invention a pour objet une variante permettant de gérer la température du fluide, tel que du liquide caloporteur, en sortie du réchauffeur afin d'atteindre le niveau de température correct selon la consigne adressée, tout en réduisant le risque de surchauffe du fluide.

À cet effet l'invention a pour objet un dispositif de chauffage électrique de fluide pour véhicule automobile, comprenant :
- au moins une entrée de fluide,
- au moins une sortie de fluide,
- au moins un élément chauffant pour chauffer électriquement le fluide,
- au moins un premier capteur de température agencé de manière à mesurer la température dudit au moins un élément chauffant, et
- un module de commande dudit au moins un élément chauffant.

Selon l'invention,
- ledit dispositif comporte en outre au moins un deuxième capteur de température agencé de manière à mesurer la température du fluide au niveau de ladite au moins une sortie dudit dispositif, et
- le module de commande comprend au moins un moyen de traitement pour :
   - exploiter les informations de température des premier et deuxième capteurs de température, et pour
   - générer une commande dudit au moins un élément chauffant en fonction des informations de température des premier et deuxième capteurs de température, de manière à réguler la température du fluide au sein du dispositif de chauffage.

Ainsi, en corrélant les informations de température des éléments chauffants et de la température en sortie dudit dispositif, le module de commande intégré dans ledit dispositif peut interpréter ces informations pour modifier la commande des éléments chauffants afin de réguler la température du fluide en sortie tout en minimisant les risques de surchauffe des éléments chauffants.

Ledit dispositif peut en outre comporter une ou plusieurs caractéristiques suivantes, prises séparément ou en combinaison :
- ledit au moins un deuxième capteur de température est moulé sur ledit dispositif ;
- ladite au moins une sortie est réalisée sous forme d'une tubulure de sortie ;
- ledit au moins un deuxième capteur de température est agencé sur la tubulure de sortie ;
- ledit au moins un deuxième capteur de température est agencé à proximité de la tubulure de sortie :
- ledit au moins un premier capteur de température est fixé sur ledit au moins un élément chauffant ;
- ledit au moins un élément chauffant comprend au moins une résistance chauffante ;
- au moins un capteur de température comprend un élément sensible à la température ;
- l'élément sensible à la température dudit au moins un deuxième capteur de température est agencé de manière à être immergé dans le fluide en fonctionnement dudit dispositif ;
- l'élément sensible à la température est une thermistance à coefficient de température négatif ;
- l'élément sensible à la température dudit au moins un capteur de température est relié électriquement au module de commande ;
- le module de commande comprend au moins un comparateur configuré pour :
   - recevoir à une première entrée une consigne de chauffage et pour
   - recevoir à une deuxième entrée une information électrique représentative de la température du fluide au niveau de ladite au moins une sortie mesurée par ledit au moins un deuxième capteur de température ;
- le comparateur est configuré pour comparer l'information électrique représentative de la température du fluide à la consigne de chauffage ;
- au moins un moyen de traitement du module de commande est configuré pour déterminer un signal de commande et/ou d'alimentation dudit au moins un élément chauffant en fonction du résultat de la comparaison entre l'information électrique représentative de la température du fluide à la consigne de chauffage ;
- le signal de commande et/ou d'alimentation comprend au moins une information de puissance électrique à injecter dans chaque élément chauffant ;
- le signal de commande et/ou d'alimentation comprend au moins une information de modulation de largeur d'impulsions PWM ;
- ledit dispositif comprend au moins un microcontrôleur et au moins un commutateur d'alimentation configuré pour être piloté par le microcontrôleur ;
- ledit dispositif comprend :
   - une première sortie de fluide,
   - une deuxième sortie de fluide,
   - un premier élément chauffant relié à la première sortie de fluide, configuré pour chauffer électriquement, à une première température, une partie du liquide caloporteur destiné à s'écouler à travers la première sortie,
   - un deuxième élément chauffant relié à la deuxième sortie de fluide, configuré pour chauffer électriquement, à une deuxième température différente de la première température, une autre partie du liquide caloporteur destiné à s'écouler à travers la deuxième sortie,
   - pour chaque élément chauffant, un premier capteur de température associé agencé de manière à mesurer la température de l'élément chauffant associé, et
   - pour chaque sortie de fluide, un deuxième capteur de température associé agencé de manière à mesurer la température du fluide au niveau de la sortie associée.

L'invention concerne également un circuit de chauffage de véhicule automobile comprenant au moins un dispositif de chauffage électrique tel que défini précédemment.

Selon un aspect de l'invention, ledit circuit comprend en outre au moins un premier et un deuxième échangeurs thermiques configurés pour diffuser de la chaleur vers deux régions distinctes de l'habitacle du véhicule. La première sortie de fluide dudit dispositif est raccordée au premier échangeur thermique, et la deuxième sortie de fluide dudit dispositif est raccordée au deuxième échangeur thermique.

Selon un autre aspect de l'invention, les deux échangeurs thermiques sont intégrés dans un même organe de diffusion de chaleur.

L'invention a encore pour objet un procédé de gestion de la température d'un fluide au sein d'un dispositif de chauffage électrique tel que défini précédemment.

Selon l'invention, ledit procédé comporte les étapes suivantes :
- on mesure la température de chaque élément chauffant,
- on émet au moins une information électrique représentative de la température de l'élément chauffant associé,
- on mesure la température du fluide à chaque sortie dudit dispositif,
- on émet au moins une information électrique représentative de la température du fluide à chaque sortie dudit dispositif,
- on détermine pour chaque élément chauffant, un signal de commande et/ou d'alimentation de l'élément chauffant en fonction des informations de température des éléments chauffants et de ladite au moins une sortie, de manière à réguler la température du fluide au sein du dispositif de chauffage.

Plus précisément :
- chaque premier capteur de température mesure la température d'un élément chauffant associé,
- chaque premier capteur de température émet au moins une information électrique représentative de la température de l'élément chauffant associé au module de commande,
- chaque deuxième capteur de température mesure la température du fluide à au moins une sortie associée dudit dispositif,
- chaque deuxième capteur de température émet au moins une information électrique, représentative de la température du fluide à ladite au moins une sortie dudit dispositif, au module de commande,
- le module de commande détermine pour chaque élément chauffant, un signal de commande et/ou d'alimentation de l'élément chauffant en fonction des informations de température des premier et deuxième capteurs de température, de manière à réguler la température du fluide au sein du dispositif de chauffage.

La gestion de la température se fait donc directement au sein du dispositif de chauffage et non au niveau du réseau du véhicule.

Ledit procédé peut en outre comporter une ou plusieurs caractéristiques suivantes, prises séparément ou en combinaison :
- ledit procédé comprend une étape de comparaison de la température mesurée par un premier capteur de température à une température seuil ;
- ledit procédé comprend une étape de comparaison de la température mesurée par un deuxième capteur de température à une consigne de chauffage ;
- ledit procédé comprend une étape dans laquelle le module de commande détermine quel élément chauffant doit être activé en fonction des informations de température des premier et deuxième capteurs de température ;
- le module de commande comprend au moins un microcontrôleur et au moins un commutateur d'alimentation pour chaque élément chauffant, et le microcontrôleur commande chaque commutateur d'alimentation de façon à activer ou désactiver l'élément chauffant associé.

D'autres caractéristiques et avantages de l'invention apparaitront plus clairement à la lecture de la description suivante, donnée à titre d'exemple illustratif et non limitatif, et des dessins annexés parmi lesquels :
- la figure 1 est une vue en perspective d'un dispositif de chauffage électrique selon un premier mode de réalisation,
- la figure 2 est un schéma fonctionnel d'un procédé de chauffage d'un liquide caloporteur reçu dans le dispositif de chauffage électrique selon le premier mode de réalisation,
- la figure 3a est une vue en perspective d'un premier exemple de capteur de température pour le dispositif de chauffage électrique,
- la figure 3b est une vue en perspective d'un deuxième exemple de capteur de température pour le dispositif de chauffage électrique,
- la figure 3c est une vue en perspective d'un troisième exemple de capteur de température pour le dispositif de chauffage électrique,
- la figure 4 est un premier exemple de capteur de température configuré pour être moulé sur le dispositif de chauffage électrique,
- la figure 5 est un deuxième exemple de capteur de température configuré pour être moulé sur le dispositif de chauffage électrique,
- la figure 6 est une représentation schématique d'un circuit de chauffage comprenant un dispositif de chauffage électrique selon un deuxième mode de réalisation représenté en perspective, et comprenant deux radiateurs réunis au sein d'un unique organe, et
- la figure 7 est un schéma fonctionnel d'un procédé de chauffage d'un liquide caloporteur reçu dans le dispositif de chauffage électrique selon le deuxième mode de réalisation.

Sur ces figures, les éléments sensiblement identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

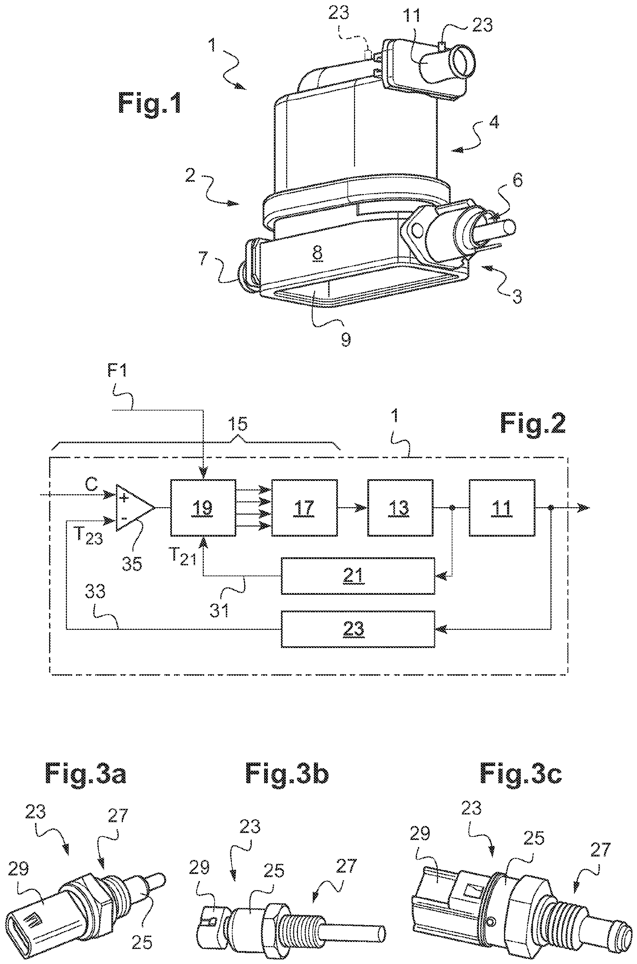

En référence à la figure 1, l'invention concerne un dispositif de chauffage électrique 1 de fluide pour véhicule automobile d'un circuit de chauffage notamment pour un appareil de chauffage et/ou climatisation.

### Dispositif et circuit de chauffage

### Premier mode de réalisation

On a représenté sur la figure 1 un premier mode de réalisation d'un dispositif de chauffage électrique 1 de fluide pour véhicule automobile pour un appareil de chauffage et/ou climatisation.

Le dispositif de chauffage électrique 1 est par exemple un dispositif de chauffage additionnel permettant de chauffer un liquide caloporteur tel que de l'eau circulant dans un circuit de chauffage d'eau pour le chauffage de l'habitacle d'un véhicule électrique.

Dans la présente, le dispositif de chauffage électrique 1 est aussi nommé réchauffeur 1. On parle également de radiateur électrique. Dans la suite de la description, on se réfère à un liquide caloporteur. Bien entendu, l'invention peut s'appliquer à tout autre fluide.

Le réchauffeur 1 représenté, comprend un boitier d'entrée 3 et un boitier de sortie 4. En particulier, le réchauffeur 1 comporte un carter 2 comprenant le boitier d'entrée 3 et le boitier de sortie 4 coiffant le boitier d'entrée 3.

Le boitier d'entrée 3 délimite un espace interne dans lequel peuvent être montés des composants électriques et/ou électroniques, par exemple réunis sur une carte d'électronique de puissance (non représentée).

Ce boitier d'entrée 3 comporte encore une entrée de câbles de puissance et de commande 6 ainsi qu'au moins une entrée ou admission 7 de liquide caloporteur. L'entrée 7 peut être réalisée sous forme d'une tubulure d'admission 7, par exemple agencée saillante sur le boitier d'entrée 3.

Le boitier d'entrée 3 du carter 2 peut être formé d'un corps ou d'une base 8 ouvert(e) sur une face, et d'un capot ou couvercle 9 fermant le corps ou base 8, de manière à délimiter conjointement avec ce corps 8 l'espace interne renfermant les composants électriques et/ou électroniques. Le capot 9 peut présenter une forme générale sensiblement plane.

Le liquide caloporteur reçu via l'entrée 7 est destiné à être dirigé par des canaux (non visibles sur les figures) vers le boitier de sortie 4 du carter 2, afin d'y être réchauffé.

Bien entendu, l'espace interne dans lequel sont montés les composants électriques et/ou électroniques est complètement distinct et isolé des canaux (non visibles) par lesquels est destiné à transiter le liquide caloporteur.

Le boitier de sortie 4 du carter 2 coiffe le boitier d'entrée 3 en étant solidarisé à celui-ci de façon étanche, de sorte que le liquide caloporteur reçu via l'entrée 7 est dirigé vers le boitier de sortie 4. Le liquide caloporteur admis par l'entrée 7 du boitier d'entrée 3 du carter 2 est ainsi transféré vers le boitier de sortie 4 pour y être réchauffé avant évacuation.

Afin de permettre l'évacuation du liquide caloporteur, le boitier de sortie 4 présente au moins une sortie 11 de liquide caloporteur. Selon l'exemple illustré, la sortie 11 de liquide caloporteur est réalisée sous forme d'une tubulure de sortie 11, par exemple agencée saillante sur le boitier de sortie 4. La tubulure de sortie 11 est destinée à être raccordée à un circuit du liquide caloporteur tel que le circuit de chauffage d'eau.

Ce boitier de sortie 4 renferme un ou plusieurs éléments chauffants 13 (voir figure 2), par exemple par effet Joule. En particulier, l'élément ou les éléments chauffants 13 comportent au moins un moyen électrique de chauffe du fluide, tel qu'une résistance chauffante.

Dans ce cas, le réchauffeur 1 comporte un module de commande 15 ou module électronique de commande 15, du ou des éléments chauffants 13. En référence aux figures 1 et 2, le réchauffeur 1 est piloté et alimenté électriquement par l'intermédiaire des câbles 6 reliés à une source d'alimentation électrique du véhicule et au module de commande 15.

Le module de commande 15 est relié à une unité centrale (non représentée) d'un véhicule automobile équipé du réchauffeur 1, via un ou plusieurs fils de communication électriques. Cette unité centrale (non représentée) peut transmettre notamment une information de limitation de consommation électrique au module de commande 15, comme cela est schématisé par la flèche F1. L'unité centrale (non représentée) peut également transmettre une consigne de chauffage C au module de commande 15.

En outre, le module de commande 15 est configuré pour envoyer des signaux de commande à l'élément chauffant 13. À titre d'exemple non limitatif, il peut s'agir de signaux de commande périodiques, à modulation de largeur d'impulsions, connus sous le sigle PWM pour l'anglais « Puise Width Modulation ». La puissance de fonctionnement peut être communiquée grâce au rapport cyclique du signal PWM, ce rapport cyclique étant défini par le ratio entre la durée de maintien à l'état haut et la période du signal PWM.

Le module de commande 15 comprend les composants électriques et/ou électroniques montés dans l'espace interne du boitier d'entrée 3. À titre d'exemple, le module de commande 15 peut comporter au moins un commutateur d'alimentation 17, tel qu'un transistor de puissance, apte à autoriser ou interdire l'alimentation de l'élément chauffant 13. Le commutateur d'alimentation 17, en particulier son ouverture et/ou fermeture, peut être piloté par un circuit de commande 19 comprenant notamment un microcontrôleur.

Les composants électriques et/ou électronique du module de commande 15 peuvent être montés sur un support de circuit électrique (non représenté), tel qu'une carte à circuit imprimé (ou PCB en anglais pour "Printed circuit board").

Le module de commande 15 comporte encore au moins un moyen d'exploitation d'un signal de mesure tel que détaillé par la suite.

En outre, le réchauffeur 1 comporte au moins un premier capteur de température 21, agencé de manière à mesurer la température du ou des éléments chauffants 13. Le premier capteur de température 21 peut comporter un élément sensible à la température tel qu'une thermistance. Il s'agit en particulier d'une thermistance à coefficient de température négatif dont l'abréviation est « CTN » ou « NTC » en anglais pour « Negative Temperature Coefficient », c'est-à-dire dont la résistance diminue de façon uniforme avec la température. Le ou chaque premier capteur de température 21 est agencé directement sur l'élément chauffant 13 associé, par exemple en étant fixé, par exemple par collage ou brasage, sur la surface externe de l'élément chauffant 13 associé.

On prévoit encore au moins un deuxième capteur de température 23, configuré pour mesurer la température du liquide caloporteur au niveau de la sortie 11. De façon similaire au premier capteur de température 21, le deuxième capteur de température 23, par exemple en laiton, peut comporter un élément sensible à la température tel qu'une thermistance. Il s'agit en particulier d'une thermistance à coefficient de température négatif.

En se référant de nouveau à la figure 1, le deuxième capteur de température 23 peut être fixé sur la surface externe de la tubulure de sortie 11, comme cela est représenté de manière schématique par un contour en trait plein d'un bloc schématisant le deuxième capteur de température 23. En variante, le deuxième capteur de température 23 peut être fixé à proximité de la tubulure de sortie 11, sur le boitier de sortie 4, comme cela est représenté de façon schématique par un contour en pointillés d'un bloc schématisant le deuxième capteur de température 23.

Avantageusement, le deuxième capteur de température 23 est agencé de sorte qu'en fonctionnement du réchauffeur 1, la thermistance est immergée dans le liquide en sortie du réchauffeur 1.

Des exemples de capteurs de température, plus particulièrement de deuxièmes capteurs de température 23, sont représentés sur les figures 3a à 3c et 4 et 5.

Dans les exemples des figures 3a à 3c, le deuxième capteur de température 23 comporte un boitier de protection 25 logeant la thermistance. Le boitier de protection 25 est avantageusement réalisé au moins en partie en un matériau métallique résistant à des températures élevées et de très bonne conduction thermique. On peut citer à titre d'exemple non limitatif et de façon non exhaustive des matériaux métalliques de conductivité thermique supérieure à 50W.m⁻¹.K⁻¹, de préférence de l'ordre de 100W.m⁻¹.K⁻¹ à 300W.m⁻¹.K⁻¹ voire supérieure à 300W.m⁻¹.K⁻¹. Il s'agit par exemple de matériaux métalliques de type cuivre ou laiton.

Par ailleurs, à titre d'exemple non limitatif, chaque boitier 25 peut également comporter un système de fixation 27 sur une paroi externe de la sortie 11, délimitant le milieu dont on cherche à connaitre la température. De façon non limitative, il peut s'agir par exemple d'un système de fixation par serrage, tel qu'un système de vissage, comme représenté sur les figures 3a à 3c, ou encore à l'aide d'une bride fixée sur le boitier de sortie 4.

On peut encore prévoir une cosse de connexion 29 pour la liaison entre les fils électriques reliés à la thermistance et des fils électriques 31, 33 (voir figure 2) permettant d'acheminer l'information électrique au module de commande 15.

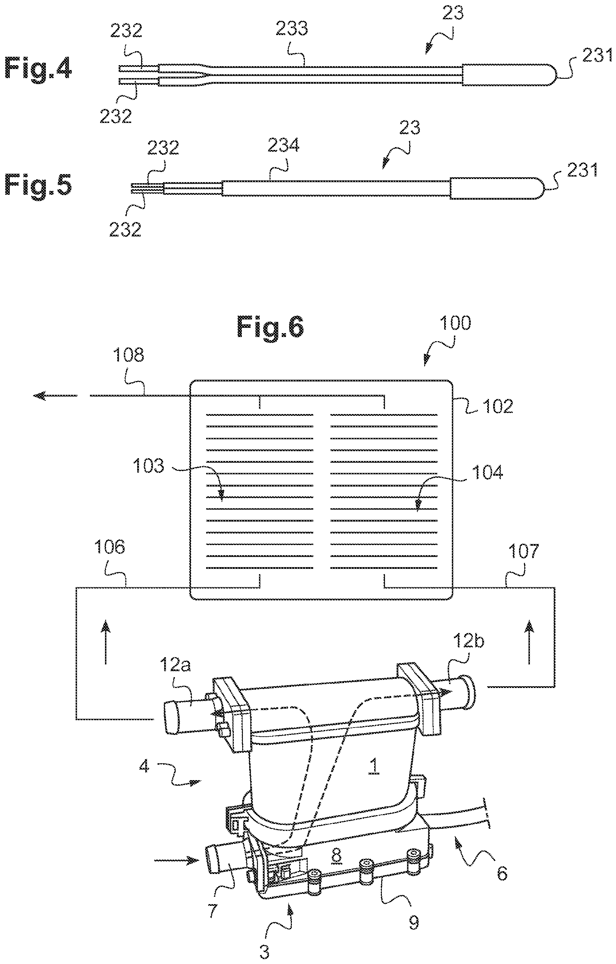

En variante, le deuxième capteur de température 23 peut être moulé directement sur le réchauffeur 1, plus précisément sur le boitier de sortie 4 à proximité ou directement sur la tubulure de sortie 11. Dans ce cas, la thermistance 231 et les fils 232 du deuxième capteur de température 23 représenté sur les figures 4 et 5, peuvent être moulés directement sur le boitier de sortie 4, par exemple directement sur ou à proximité de la tubulure de sortie 11, sans nécessiter de boitier de protection 25 comme décrit précédemment en référence aux figures 3a à 3c.

En outre, on peut prévoir aussi bien une seule couche d'isolant 233 (figure 4) qu'une double couche d'isolant 234 (figure 5).

En se référant de nouveau à la figure 2, le module de commande 15 peut recevoir des informations représentatives des températures T₂₁ et T₂₃ mesurées respectivement par le premier capteur de température 21 et par le deuxième capteur de température 23. Le module de commande 15 peut en outre contrôler l'alimentation et modifier la commande du ou des éléments chauffants 13 en fonction de la consigne de chauffage C et des températures T₂₁ et T₂₃ mesurées respectivement par le premier capteur de température 21 et par le deuxième capteur de température 23.

Plus précisément, le module de commande 15 peut adapter la commande de l'élément chauffant 13 en fonction des informations de température T₂₁ et T₂₃ mesurées par les premier et deuxième capteurs de température 21, 23, de manière à réguler la température du liquide. Cette régulation de température se fait alors au sein du dispositif de chauffage 1, et non plus au niveau de l'unité centrale (non représentée) du véhicule automobile ayant transmis la consigne de chauffage C.

Pour ce faire, chaque premier capteur de température 21 et chaque deuxième capteur 23 peut comprendre au moins un moyen de transmission à destination du module de commande 15 d'une information représentative de la résistance de la thermistance et par conséquent de la température T₂₁, T₂₃ mesurée. Dans l'exemple décrit, chaque capteur de température 21, 23, en particulier leur thermistance, est relié à au moins un moyen de traitement du module de commande 15, via les fils électriques schématisés par les flèches 31 et 33. Ces fils électriques permettent d'acheminer une information électrique représentative de la résistance de la thermistance et par conséquent de la température T₂₁, T₂₃ mesurée par les thermistances des capteurs de température 21, 23.

Le module de commande 15 comprend donc au moins un moyen de traitement configuré pour exploiter des informations en provenance des capteurs de température 21 et 23, et pour générer une commande de l'élément chauffant en fonction des informations de température, de manière à réguler la température du fluide au sein du réchauffeur 1.

Plus précisément, le module de commande 15 comprend au moins un moyen de traitement pour recevoir et exploiter un signal de mesure en provenance du premier capteur de température 21. Il peut s'agir d'un moyen de traitement du circuit de commande 19 du module de commande 15. Le premier capteur de température 21, en particulier sa thermistance, est relié via les fils électriques schématisés par la flèche 31 au moyen de traitement du circuit de commande 19. Le moyen de traitement peut détecter un événement ou plus particulièrement un défaut, tel qu'une surchauffe de l'élément chauffant 13, à partir de cette information. Par exemple, en cas de température excessive ou surchauffe détectée, le circuit de commande 19 comprend au moins un moyen de traitement pour envoyer un signal de désactivation de l'élément chauffant 13 en défaut, c'est-à-dire ici en surchauffe, au commutateur d'alimentation 17 correspondant.

De plus, le module de commande 15 comprend au moins un moyen de traitement pour recevoir et exploiter un signal de mesure en provenance du deuxième capteur de température 23. Le deuxième capteur de température 23, en particulier sa thermistance, est relié via les fils électriques schématisés par la flèche 33 à ce moyen de traitement. Il peut s'agir notamment d'un moyen de traitement d'un comparateur 35 du module de commande 15. Dans ce cas, la consigne de chauffage C peut être reçue sur une première entrée du comparateur 35 et l'information électrique représentative de la résistance de la thermistance du deuxième capteur de température 23 et donc de la température T₂₃ mesurée, peut être reçue sur une deuxième entrée du comparateur 35 et comparée à la consigne de chauffage C. La première entrée du comparateur 35 peut être une entrée positive, et la deuxième entrée du comparateur 35 peut être une entrée négative.

Le comparateur 35 peut comprendre au moins un moyen d'émission des résultats de cette comparaison.

Le résultat de la comparaison peut être transmis à au moins un moyen de réception du circuit de commande 19. En fonction de ce résultat de comparaison, au moins un moyen de traitement du circuit de commande 19 peut déterminer et générer un signal de commande et/ou d'alimentation de l'élément chauffant 13.

En particulier, ce signal peut comprendre au moins une information de puissance électrique à injecter dans le ou les éléments chauffants 13 en tenant compte de l'éventuelle différence entre la valeur de la consigne de chauffage C et la valeur effective de la température du liquide caloporteur mesurée en sortie 11 du réchauffeur 1.

Ainsi, dans le cas de signaux de commande PWM, en prenant en compte les informations de température T₂₁ et T₂₃ mesurées par les premier et deuxième capteurs de température 21, 23, le circuit de commande 19 peut, à titre d'exemple non limitatif, jouer notamment sur le taux de modulation, sur le rapport cyclique ou encore sur le nombre d'éléments chauffants 13 à activer, de façon à pouvoir atteindre la consigne de chauffage en sortie 11 du réchauffeur 1. Dans ce cas, le signal de commande et/ou d'alimentation émis par le circuit de commande 19 comprend au moins une information de modulation de largeur d'impulsions PWM.

Cette modification des signaux de commande a lieu directement au sein du réchauffeur 1 et non au niveau de l'unité centrale (non représentée) du véhicule automobile.

Avantageusement, afin d'optimiser la gestion de la température du liquide caloporteur, le circuit de commande 19 peut également tenir compte de l'inertie thermique, de la capacité thermique et d'autres caractéristiques du ou des éléments chauffants 13 ou de caractéristiques thermiques du fluide.

### Deuxième mode de réalisation

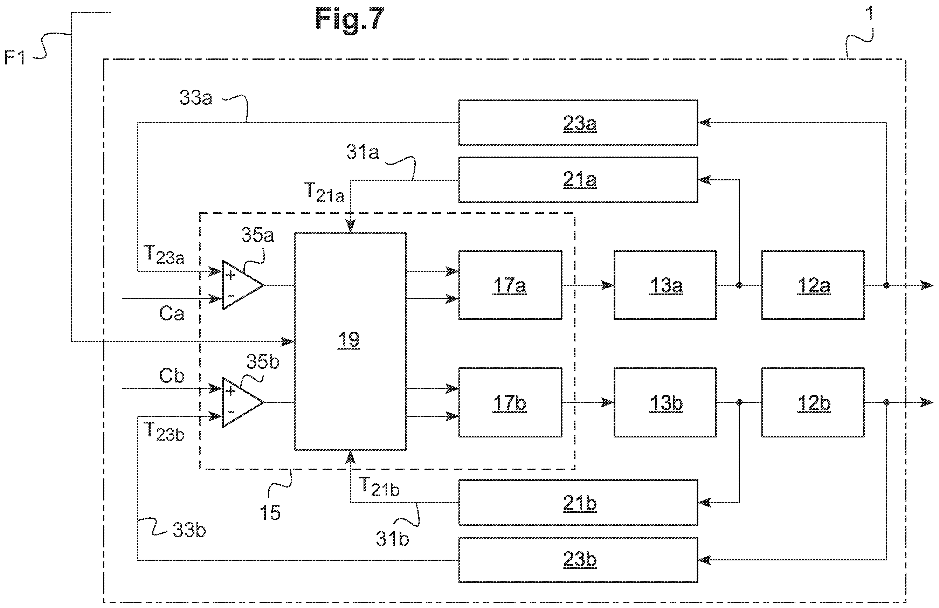

Un deuxième mode de réalisation est illustré sur les figures 6 et 7. Ce deuxième mode de réalisation diffère du premier mode de réalisation par le fait que le réchauffeur électrique 1 qui comporte une entrée ou admission unique 7 pour le liquide caloporteur, comporte une première sortie 12a et une deuxième sortie 12b de fluide distinctes.

Selon ce deuxième mode de réalisation, on prévoit pour un circuit de chauffage 100, qui est représenté de façon schématique sur la figure 6, un même et unique organe 102, tel qu'un organe de diffusion de chaleur 102, assurant conjointement le réchauffage et la répartition de la chaleur du liquide caloporteur dirigé vers un premier et un deuxième échangeurs thermiques 103, 104, tels que des radiateurs, distincts, du circuit de chauffage 100.

Ceci permet de réguler, selon deux températures de consigne Ca et Cb (figure 7), deux régions distinctes de l'habitacle, par exemple la partie gauche et la partie droite de l'habitacle du véhicule automobile, ou les parties avant et arrière du véhicule.

Plus précisément, les deux radiateurs distincts 103 et 104 permettent de diffuser la chaleur respectivement vers la partie gauche et la partie droite de l'habitacle du véhicule automobile équipé de ce circuit de chauffage 100 (figure 6).

En variante ou en complément, on peut prévoir deux boucles de chauffage distinctes, une boucle de chauffage permettant le chauffage de l'habitacle et une autre boucle permettant par exemple sans se limiter, le chauffage d'un plancher chauffant ou encore le conditionnement d'une batterie du véhicule. Dans ce cas, le premier échangeur thermique 103 peut être dans la première boucle et assurer le chauffage de l'habitacle selon une première consigne Ca, tandis que le deuxième échangeur thermique 104 peut être dans la deuxième boucle par exemple pour le chauffage du plancher chauffant ou le conditionnement d'une batterie selon une deuxième consigne Cb.

Selon cette alternative, les deux radiateurs 103 et 104 ne sont pas forcément tous les deux dédiés au chauffage de l'habitacle.

Chaque radiateur 103, 104 comporte une entrée qui lui est propre, ces entrées étant respectivement repérées par 106 et 107. Les sorties de ces deux radiateurs 103, 104 peuvent être réunies en une même et unique sortie repérée par 108.

Les sorties 12a et 12b du réchauffeur 1 sont connectées respectivement à l'entrée 106 et à l'entrée 107 des radiateurs 103 et 104.

La sortie 108 de l'organe 102 qui réunit les sorties de radiateurs 103 et 104 peut quant à elle être connectée à l'entrée 7 du réchauffeur 1. D'autres composants du circuit non représentés, peuvent le cas échéant être interposés entre la sortie 108 des radiateurs et l'entrée 7 du réchauffeur 1.

Le réchauffeur 1 est configuré pour réchauffer le liquide caloporteur qu'il reçoit à l'entrée 7 et pour répartir la puissance thermique de réchauffage de manière commandée, entre une partie du liquide qui est dirigée vers sa première sortie 12a et l'autre partie du liquide dirigée vers sa deuxième sortie 12b. Autrement dit, ce réchauffeur 1 est capable de délivrer du liquide caloporteur sur la première sortie 12a à une première température différente de la deuxième température du liquide caloporteur qu'il délivre au niveau de sa deuxième sortie 12b.

Dans l'exemple de la figure 7, le réchauffeur 1 peut comporter à l'intérieur du boitier de sortie 4, au moins un premier et un deuxième éléments chauffants 13a et 13b, par exemple par effet Joule, respectivement associés aux premier et deuxième radiateurs 103, 104 représentés en figure 6.

Le premier élément chauffant 13a est relié à la première sortie 12a, et est configuré pour chauffer électriquement, à la première température, la partie du liquide caloporteur destinée à s'écouler à travers la première sortie 12a.

Le deuxième élément chauffant 13b est relié à la deuxième sortie 12b, et est configuré pour chauffer électriquement, à la deuxième température la partie du liquide caloporteur destinée à s'écouler à travers la deuxième sortie 12b.

Selon le deuxième mode de réalisation, en fonctionnement du réchauffeur 1, le liquide caloporteur admis dans le boitier d'entrée 3 par l'entrée 7, s'engage dans deux canaux (non visibles sur les figures), de manière à former deux flux de liquide distincts. Ces deux flux de liquide traversent respectivement un élément de chauffage 13a ou 13b, de manière à être réchauffés différemment à la première température et à la deuxième température différente de la première température. En référence aux figures 6 et 7, le liquide réchauffé par le premier élément chauffant 13a s'évacue vers la première sortie 12a pour alimenter le premier radiateur 103, alors que le liquide réchauffé par le deuxième élément chauffant 13b s'évacue vers la deuxième sortie 12b pour alimenter le deuxième radiateur 104.

Comme précédemment selon le premier mode de réalisation, le réchauffeur 1 comporte un module de commande 15.

Ce module de commande 15 alimente les deux éléments chauffants 13a, 13b, à partir de la puissance électrique et des instructions de commandes reçues sur les câbles 6 (voir figure 6).

En particulier, en se référant de nouveau à la figure 7, le module de commande 15 peut comporter un circuit de commande 19 configuré pour piloter deux commutateurs d'alimentation 17a et 17b respectivement dédiés à un élément chauffant 13a, 13b associé, de manière à alimenter les deux éléments chauffants 13a et 13b avec des puissances différentes, conformément à des instructions de commande que le circuit de commande 19 reçoit.

Pour ce faire, on prévoit autant de commutateurs d'alimentation 17a, 17b que d'éléments chauffants 13a, 13b. Dans cet exemple, deux commutateurs d'alimentation 17a, 17b sont prévus.

En outre, on prévoit également un premier capteur de température 21a, 21b pour chaque élément chauffant 13a, 13b et un deuxième capteur de température 23a, 23b pour chaque sortie 12a, 12b de fluide.

Le module de commande 15 peut contrôler l'alimentation des deux éléments chauffants 13a, 13b en fonction de deux consignes de chauffage Ca, Cb et des températures T₂₁ₐ, T_{21b} mesurées par les premiers capteurs de température 21a et 21b, et des températures T₂₃ₐ, T_{23b}, par les deuxièmes capteurs de température 23a et 23b.

De façon similaire au premier mode de réalisation, chaque premier capteur de température 21a, 21b associé à un élément chauffant 13a, 13b, est relié à au moins un moyen de traitement, par exemple du circuit de commande 19, configuré pour recevoir et exploiter un signal de mesure, via des fils électriques schématisé par les flèches 31a, 31b qui permettent d'acheminer une information électrique représentative de la température T₂₁ₐ, T_{21b} mesurée par les premiers capteurs de température 21a, 21b.

De même, chaque deuxième capteur de température 23a, 23b associé à une sortie 12a, 12b, est relié à au moins un moyen de traitement pour recevoir et exploiter un signal de mesure. Il s'agit par exemple d'un moyen de traitement d'un comparateur 35a, 35b associé, via des fils électriques schématisé par les flèches 33a, 33b qui permettent d'acheminer une information électrique représentative de la température T₂₃ₐ, T_{23b} mesurée par les deuxièmes capteurs de température 23a, 23b aux comparateurs 35a, 35b respectifs.

Dans ce cas,
- une première consigne de chauffage Ca peut être reçue sur une première entrée d'un premier comparateur 35a et
- l'information électrique représentative de la résistance de la thermistance du deuxième capteur de température 23a associé à la première sortie 12a du réchauffeur 1 et donc de la température T₂₃ₐ mesurée, peut être reçue sur une deuxième entrée du premier comparateur 35a et comparée à la première consigne de chauffage Ca.

En fonction de ce résultat de comparaison, au moins un moyen de traitement du circuit de commande 19 peut déterminer, ou adapter un signal de commande et/ou d'alimentation du premier élément chauffant 13a. En particulier, ce signal peut comprendre au moins une information de puissance électrique à injecter dans le premier élément chauffant 13a en tenant compte de l'éventuelle différence entre la valeur de la première consigne de chauffage Ca et la valeur effective de la température du liquide caloporteur mesurée à la première sortie 12a du réchauffeur 1.

De même,
- une deuxième consigne de chauffage Cb peut être reçue sur une première entrée d'un deuxième comparateur 35b et
- l'information électrique représentative de la résistance de la thermistance du deuxième capteur de température 23b associé à une deuxième sortie 12b du réchauffeur 1 et donc de la température T_{23b} mesurée, peut être reçue sur une deuxième entrée du deuxième comparateur 35b et comparée à la deuxième consigne de chauffage Cb.

En fonction de ce résultat de comparaison, au moins un moyen de traitement du circuit de commande 19 peut déterminer, ou adapter un signal de commande et/ou d'alimentation du deuxième élément chauffant 13b. En particulier, ce signal peut comprendre au moins une information de puissance électrique à injecter dans le deuxième élément chauffant 13b en tenant compte de l'éventuelle différence entre la valeur de la deuxième consigne de chauffage Cb et la valeur effective de la température du liquide caloporteur mesurée à la deuxième sortie 12b du réchauffeur 1.

Ainsi, le module de commande 15 peut contrôler l'alimentation et modifier la commande de chaque élément chauffant 13a, 13b en fonction de chaque consigne de chauffage Ca, Cb et des températures T₂₁ₐ, T_{21b} et T₂₃ₐ, T_{23b} mesurées respectivement par chaque premier capteur de température 21a, 21b et par chaque deuxième capteur de température 23a, 23b.

### Procédé

On décrit maintenant, en référence aux figures 2 et 7, un procédé de gestion de la température d'un fluide, tel qu'un liquide caloporteur, au sein d'un réchauffeur 1 tel que décrit précédemment.

Le procédé comporte une étape de mesure de la température T₂₁ ou T₂₁ₐ, T_{21b} de chaque élément chauffant 13 ou 13a, 13b. Cette étape est réalisée par chaque premier capteur de température 21 ou 21a, 21b associé à un élément chauffant 13 ou 13a, 13b.

Une fois la mesure effectuée, le procédé comprend une étape d'émission ou transmission d'au moins une information électrique représentative de la température de l'élément chauffant associé 13 ou 13a, 13b au module de commande 15.

Le procédé comprend également une étape de mesure de la température du liquide T₂₃ au niveau de la sortie 11 du réchauffeur 1 selon le premier mode de réalisation (figure 2) ou T₂₃ₐ, T_{23b} au niveau de chaque sortie 12a, 12b selon le deuxième mode de réalisation (figure 7). Cette mesure peut être réalisée par le deuxième capteur de température 23 ou chaque deuxième capteur de température 23a, 23b.

Cette étape de mesure est suivie d'une étape d'émission ou transmission d'au moins une information électrique représentative de la température du fluide T₂₃ à la sortie 11 ou T₂₃ₐ, T_{23b} à chaque sortie 12a, 12b.

À réception de ces informations, le module de commande 15 détermine pour chaque élément chauffant 13 ou 13a, 13b, un signal de commande et/ou d'alimentation de l'élément chauffant 13 ou de chaque élément chauffant 13a, 13b. Un tel signal est déterminé en fonction des informations de température des premier et deuxième capteurs de température 21 et 23, selon le premier mode de réalisation. Ou, selon le deuxième mode de réalisation, un tel signal est déterminé d'une part pour le premier élément chauffant 13a en fonction des informations de température des premier et deuxième capteurs de température 21a et 23a, et d'autre part pour le deuxième élément chauffant 13b en fonction des informations de température des premier et deuxième capteurs de température 21b et 23b. On régule ainsi la température du liquide au sein même du réchauffeur 1.

Avantageusement, le procédé comprend une étape de comparaison de la température T₂₁ ou T₂₁ₐ, T_{21b} mesurée par un premier capteur 21 ou 21a, 21b à une température seuil. La température seuil choisie est représentative d'une température excessive correspondant à une surchauffe ou risquant de conduire à une surchauffe de l'élément chauffant 13, 13a, 13b associé.

De préférence, le procédé comprend une étape de comparaison de la température T₂₃ mesurée par un deuxième capteur 23 à la consigne de chauffage C selon le premier mode de réalisation. Dans un réchauffeur 1 selon le deuxième mode de réalisation, le procédé comprend une étape de comparaison de la température T₂₃ₐ, respectivement T_{23b}, mesurée par un deuxième capteur 23a, respectivement 23b, à la consigne de chauffage Ca, respectivement Cb, associée.

Par ailleurs, le procédé peut comprendre une étape dans laquelle le module de commande 15, du réchauffeur 1 selon l'un ou l'autre des modes de réalisation, détermine quel élément chauffant 13 ; 13a, 13b à activer en fonction des informations de température des premier et deuxième capteurs de température 21, 23 ou 21a, 23a et 21b, 23b. Enfin, le microcontrôleur du module de commande 15 peut commander chaque commutateur d'alimentation 17 ; 17a, 17b de façon à activer ou désactiver l'élément chauffant 13 ; 13a, 13b associé.

Bien entendu, l'ordre d'au moins certaines étapes de ce procédé peut être interverti.

Ainsi, avec un ou plusieurs deuxièmes capteurs de température 23 ; 23a, 23b à la sortie 11 ou à chaque sortie 12a, 12b du réchauffeur 1, la consigne C ; Ca, Cb sera l'objectif à atteindre et en fonction de la température du liquide mesurée à la ou chaque sortie 11 ; 12a, 12b du réchauffeur 1, la commande de chaque élément chauffant 13 ; 13a, 13b sera adaptée et contrôlée directement par le module de commande 15 du réchauffeur 1.

Ceci permet de simplifier la gestion du chauffage du liquide caloporteur pour le constructeur automobile.

En outre, cette information est corrélée avec une information de température mesurée par un ou plusieurs premiers capteurs de température 21 ; 21a, 21b de façon à limiter les risques de surchauffe

Dans la présente, on a décrit des modes de réalisation de dispositifs de chauffage électrique 1 destinés à être raccordés à un circuit de chauffage de liquide caloporteur tel que de l'eau pour le chauffage de l'habitacle d'un véhicule électrique ou hybride. Bien entendu, le dispositif de chauffage électrique 1 selon l'invention peut être raccordé à toute autre boucle ou tout autre appareil de chauffage et/ou de climatisation d'un véhicule automobile.

## Revendications

1. Dispositif de chauffage (1) électrique de fluide pour véhicule automobile, comprenant :
- au moins une entrée (7) de fluide,
- au moins une sortie (11 ; 12a, 12b) de fluide,
- au moins un élément chauffant (13 ; 13a, 13b) pour chauffer électriquement le fluide,
- au moins un premier capteur de température (21 ; 21a, 21b) agencé de manière à mesurer la température dudit au moins un élément chauffant (13 ; 13a, 13b), et
- un module de commande (15) dudit au moins un élément chauffant (13 ; 13a, 13b),
**caractérisé en ce que** :
- ledit dispositif (1) comporte en outre au moins un deuxième capteur de température (23 ; 23a, 23b) agencé de manière à mesurer la température du fluide au niveau de ladite au moins une sortie (11 ; 12a, 12b) dudit dispositif (1), et **en ce que**
- le module de commande (15) comprend au moins un moyen de traitement (17 ; 17a, 17b, 19, 35 ; 35a, 35b) pour :
• exploiter les informations de température (T₂₁ ; T₂₁ₐ, T_{21b}, T₂₃ ; T₂₃ₐ, T_{23b}) des premier (21 ; 21a, 21b) et deuxième (23 ; 23a, 23b) capteurs de température, et pour
• générer une commande dudit au moins un élément chauffant (13 ; 13a, 13b) en fonction des informations de température (T₂₁ ; T₂₁ₐ, T_{21b}, T₂₃ ; T₂₃ₐ, T_{23b}) des premier (21 ; 21a, 21b) et deuxième (23 ; 23a, 23b) capteurs de température, de manière à réguler la température du fluide au sein du dispositif de chauffage (1).

2. Dispositif (1) selon la revendication 1, dans lequel ledit au moins un deuxième capteur de température (23 ; 23a, 23b) est moulé sur ledit dispositif (1).

3. Dispositif (1) selon l'une quelconque des revendications précédentes, dans lequel au moins un capteur de température (21 ; 21a, 21b ; 23 ; 23a, 23b) comprend un élément sensible à la température (231).

4. Dispositif (1) selon la revendication 3, dans lequel l'élément sensible à la température (231) dudit au moins un deuxième capteur de température (23 ; 23a, 23b) est agencé de manière à être immergé dans le fluide en fonctionnement dudit dispositif (1).

5. Dispositif (1) selon l'une des revendications 3 ou 4, dans lequel l'élément sensible à la température (231) est une thermistance à coefficient de température négatif.

6. Dispositif (1) selon l'une des revendications 3 à 5, dans lequel l'élément sensible à la température dudit au moins un capteur de température (21 ; 21a, 21b ; 23 ; 23a, 23b) est relié électriquement au module de commande (15).

7. Dispositif (1) selon la revendication 6, dans lequel le module de commande (15) comprend au moins un comparateur (35 ; 35a, 35b) configuré pour :
- recevoir à une première entrée une consigne de chauffage (C ; Ca, Cb) et pour
- recevoir à une deuxième entrée une information électrique représentative de la température (T₂₃ ; T₂₃ₐ, T_{23b}) du fluide au niveau de ladite au moins une sortie (11 ; 12a, 12b) mesurée par ledit au moins un deuxième capteur de température (23 ; 23a, 23b).

8. Dispositif (1) selon la revendication 7, dans lequel le comparateur (35 ; 35a, 35b) est configuré pour comparer l'information électrique représentative de la température (T₂₃ ; T₂₃ₐ, T_{23b}) du fluide à la consigne de chauffage (C ; Ca, Cb).

9. Dispositif (1) selon la revendication 8, dans lequel au moins un moyen de traitement (19) du module de commande (15) est configuré pour déterminer un signal de commande et/ou d'alimentation dudit au moins un élément chauffant (13 ; 13a, 13b) en fonction du résultat de la comparaison entre l'information électrique représentative de la température (T₂₃ ; T₂₃ₐ, T_{23b}) du fluide à la consigne de chauffage (C ; Ca, Cb).

10. Dispositif (1) selon l'une quelconque des revendications précédentes, comprenant :
- une première sortie (12a) de fluide,
- une deuxième sortie (12b) de fluide,
- un premier élément chauffant (13a) relié à la première sortie (12a) de fluide, configuré pour chauffer électriquement, à une première température, une partie du liquide caloporteur destiné à s'écouler à travers la première sortie (12a),
- un deuxième élément chauffant (13b) relié à la deuxième sortie (12b) de fluide, configuré pour chauffer électriquement, à une deuxième température différente de la première température, une autre partie du liquide caloporteur destiné à s'écouler à travers la deuxième sortie (12b),
- pour chaque élément chauffant, un premier capteur de température associé agencé de manière à mesurer la température de l'élément chauffant associé, et
- pour chaque sortie de fluide (12a, 12b), un deuxième capteur de température (23a, 23b) associé agencé de manière à mesurer la température du fluide au niveau de la sortie 12a, 12b) associée.

11. Circuit de chauffage (100) d'un habitacle de véhicule, **caractérisé en ce qu'**il comporte au moins un dispositif de chauffage (1) électrique selon l'une quelconque des revendications précédentes.

12. Circuit de chauffage (100) selon la revendication 11, dans lequel le dispositif de chauffage (1) est conforme à la revendication 11, ledit circuit (100) comprenant en outre au moins un premier et un deuxième échangeurs thermiques (103, 104) configurés pour diffuser de la chaleur vers deux régions distinctes de l'habitacle du véhicule, et dans lequel la première sortie (12a) de fluide dudit dispositif (1) est raccordée au premier échangeur thermique (103), et la deuxième sortie (12b) de fluide dudit dispositif (1) est raccordée au deuxième échangeur thermique (104).

13. Procédé de gestion de la température d'un fluide au sein d'un dispositif de chauffage (1) électrique selon l'une quelconque des revendications 1 à 10, **caractérisé en ce que** ledit procédé comporte les étapes suivantes :
- chaque premier capteur de température (21 ; 21a, 21b) mesure la température (T₂₁ ; T₂₁ₐ, T_{21b}) d'un élément chauffant (13 ; 13a, 13b) associé,
- chaque premier capteur de température (21 ; 21a, 21b) émet au moins une information électrique représentative de la température (T₂₁ ; T₂₁ₐ, T_{21b}) de l'élément chauffant associé (13 ; 13a, 13b) au module de commande (15),
- chaque deuxième capteur de température (23 ; 23a, 23b) mesure la température du fluide (T₂₃ ; T₂₃ₐ, T_{23b}) à au moins une sortie (11 ; 12a, 12b) associée dudit dispositif (1),
- chaque deuxième capteur de température (23 ; 23a, 23b) émet au moins une information électrique, représentative de la température du fluide (T₂₃ ; T₂₃ₐ, T_{23b}) à ladite au moins une sortie (11 ; 12a, 12b) dudit dispositif (1), au module de commande (15),
- le module de commande (15) détermine pour chaque élément chauffant (13 ; 13a, 13b), un signal de commande et/ou d'alimentation de l'élément chauffant (13 ; 13a, 13b) en fonction des informations de température (T₂₁ ; T₂₁ₐ, T_{21b}, T₂₃ ; T₂₃ₐ, T_{23b}) des premier (21 ; 21a, 21b) et deuxième (23 ; 23a, 23b) capteurs de température, de manière à réguler la température du fluide au sein du dispositif de chauffage (1).

14. Procédé de gestion de la température selon la revendication 13, comprenant une étape dans laquelle le module de commande (15) détermine quel élément chauffant (13 ; 13a, 13b) doit être activé en fonction des informations de température (T₂₁ ; T₂₁ₐ, T_{21b}, T₂₃ ; T₂₃ₐ, T_{23b}) des premier (21 ; 21a, 21b) et deuxième (23 ; 23a, 23b) capteurs de température.

15. Procédé de gestion de la température selon la revendication 14, dans lequel le module de commande (15) comprend au moins un microcontrôleur et au moins un commutateur d'alimentation pour chaque élément chauffant (13 ; 13a, 13b), et dans lequel le microcontrôleur commande chaque commutateur d'alimentation (17 ; 17a, 17b) de façon à activer ou désactiver l'élément chauffant (13 ; 13a, 13b) associé.

## Patentansprüche

1. Elektrische Fluidheizvorrichtung (1) für ein Kraftfahrzeug, die enthält:
- mindestens einen Fluideingang (7),
- mindestens einen Fluidausgang (11; 12a, 12b),
- mindestens ein Heizelement (13; 13a, 13b), um das Fluid elektrisch zu erwärmen,
- mindestens einen ersten Temperaturfühler (21; 21a, 21b), der eingerichtet ist, um die Temperatur des mindestens einen Heizelements (13; 13a, 13b) zu messen, und
- ein Steuermodul (15) des mindestens einen Heizelements (13; 13a, 13b),
**dadurch gekennzeichnet, dass**:
- die Vorrichtung (1) außerdem mindestens einen zweiten Temperaturfühler (23; 23a, 23b) aufweist, der eingerichtet ist, um die Temperatur des Fluids im Bereich des mindestens einen Ausgangs (11; 12a, 12b) der Vorrichtung (1) zu messen, und dass
- das Steuermodul (15) mindestens eine Verarbeitungseinrichtung (17; 17a, 17b, 19, 35; 35a, 35b) enthält, um:
• die Temperaturinformationen (T₂₁; T₂₁ₐ, T_{21b}, T₂₃; T₂₃ₐ, T_{23b}) der ersten (21; 21a, 21b) und zweiten (23; 23a, 23b) Temperaturfühler auszuwerten, und um
• eine Steuerung des mindestens einen Heizelements (13; 13a, 13b) abhängig von den Temperaturinformationen (T₂₁; T₂₁ₐ, T_{21b}, T₂₃; T₂₃ₐ, T_{23b}) der ersten (21; 21a, 21b) und zweiten (23; 23a, 23) Temperaturfühler zu generieren, um die Temperatur des Fluids innerhalb der Heizvorrichtung (1) zu regeln.

2. Vorrichtung (1) nach Anspruch 1, wobei der mindestens eine zweite Temperaturfühler (23; 23a, 23b) auf die Vorrichtung (1) geformt ist.

3. Vorrichtung (1) nach einem der vorhergehenden Ansprüche, wobei mindestens ein Temperaturfühler (21; 21a, 21b; 23; 23a, 23b) ein temperaturempfindliches Element (231) enthält.

4. Vorrichtung (1) nach Anspruch 3, wobei das temperaturempfindliche Element (231) des mindestens einen zweiten Temperaturfühlers (23; 23a, 23b) so angeordnet ist, dass es beim Betrieb der Vorrichtung (1) in das Fluid eingetaucht ist.

5. Vorrichtung (1) nach einem der Ansprüche 3 oder 4, wobei das temperaturempfindliche Element (231) ein Thermistor mit negativem Temperaturkoeffizienten ist.

6. Vorrichtung (1) nach einem der Ansprüche 3 bis 5, wobei das temperaturempfindliche Element des mindestens einen Temperaturfühlers (21; 21a, 21b; 23; 23a, 23b) elektrisch mit dem Steuermodul (15) verbunden ist.

7. Vorrichtung (1) nach Anspruch 6, wobei das Steuermodul (15) mindestens einen Komparator (35; 35a, 35b) enthält, der konfiguriert ist, um:
- an einem ersten Eingang einen Heizsollwert (C; Ca, Cb) zu empfangen und um
- an einem zweiten Eingang eine für die Temperatur (T₂₃; T₂₃ₐ, T_{23b}) des Fluids im Bereich des mindestens einen Ausgangs (11; 12a, 12b) repräsentative elektrische Information zu empfangen, die vom mindestens einen zweiten Temperaturfühler (23; 23a, 23b) gemessen wird.

8. Vorrichtung (1) nach Anspruch 7, wobei der Komparator (35; 35a, 35b) konfiguriert ist, die für die Temperatur (T₂₃; T₂₃ₐ, T_{23b}) des Fluids repräsentative elektrische Information mit dem Heizsollwert (C; Ca, Cb) zu vergleichen.

9. Vorrichtung (1) nach Anspruch 8, wobei mindestens eine Verarbeitungseinrichtung (19) des Steuermoduls (15) konfiguriert ist, ein Steuer- und/oder Versorgungssignal des mindestens einen Heizelements (13; 13a, 13b) abhängig vom Ergebnis des Vergleichs zwischen der für die Temperatur (T₂₃; T₂₃ₐ, T_{23b}) des Fluids repräsentativen elektrischen Information und dem Heizsollwert (C; Ca, Cb) zu bestimmen.

10. Vorrichtung (1) nach einem der vorhergehenden Ansprüche, die enthält:
- einen ersten Fluidausgang (12a),
- einen zweiten Fluidausgang (12b),
- ein mit dem ersten Fluidausgang (12a) verbundenes erstes Heizelement (13a), das konfiguriert ist, einen Teil des Wärmeträgerfluids, der dazu bestimmt ist, durch den ersten Ausgang (12a) zu fließen, auf eine erste Temperatur elektrisch zu erwärmen,
- ein mit dem zweiten Fluidausgang (12b) verbundenes zweites Heizelement (13b), das konfiguriert ist, einen anderen Teil des Wärmeträgerfluids, der dazu bestimmt ist, durch den zweiten Ausgang (12b) zu fließen, auf eine zweite Temperatur anders als die erste Temperatur elektrisch zu erwärmen,
- für jedes Heizelement einen zugeordneten ersten Temperaturfühler, der eingerichtet ist, um die Temperatur des zugeordneten Heizelements zu messen, und
- für jeden Fluidausgang (12a, 12b) einen zweiten zugeordneten Temperaturfühler (23a, 23b), der eingerichtet ist, um die Temperatur des Fluids im Bereich des zugeordneten Ausgangs (12a, 12b) zu messen.

11. Heizkreis (100) eines Fahrzeuginnenraums, **dadurch gekennzeichnet, dass** er mindestens eine elektrische Heizvorrichtung (1) nach einem der vorhergehenden Ansprüche aufweist.

12. Heizkreis (100) nach Anspruch 11, wobei die Heizvorrichtung (1) Anspruch 11 entspricht, wobei der Kreis (100) außerdem mindestens einen ersten und einen zweiten Wärmetauscher (103, 104) enthält, die konfiguriert sind, Wärme zu zwei unterschiedlichen Bereichen des Fahrzeuginnenraums auszustrahlen, und wobei der erste Fluidausgang (12a) der Vorrichtung (1) an den ersten Wärmetauscher (103) angeschlossen ist, und der zweite Fluidausgang (12b) an den zweiten Wärmetauscher (104) angeschlossen ist.

13. Verfahren zur Verwaltung der Temperatur eines Fluids innerhalb einer elektrischen Heizvorrichtung (1) nach einem der Ansprüche 1 bis 10, **dadurch gekennzeichnet, dass** das Verfahren die folgenden Schritte aufweist:
- jeder erste Temperaturfühler (21; 21a, 21b) misst die Temperatur (T₂₁; T₂₁ₐ, T_{21b}) eines zugeordneten Heizelements (13; 13a, 13b),
- jeder erste Temperaturfühler (21; 21a, 21b) sendet mindestens eine für die Temperatur (T₂₁; T₂₁ₐ, T_{21b}) des zugeordneten Heizelements (13; 13a, 13b) repräsentative elektrische Information an das Steuermodul (15),
- jeder zweite Temperaturfühler (23; 23a, 23b) misst die Temperatur des Fluids (T₂₃; T₂₃ₐ, T_{23b}) an mindestens einem zugeordneten Ausgang (11; 12a, 12b) der Vorrichtung (1),
- jeder zweite Temperaturfühler (23; 23a, 23b) sendet mindestens eine für die Temperatur des Fluids (T₂₃; T₂₃ₐ, T_{23b}) an dem mindestens einen Ausgang (11; 12a, 12b) der Vorrichtung (1) repräsentative elektrische Information an das Steuermodul (15),
- das Steuermodul (15) bestimmt für jedes Heizelement (13; 13a, 13b) ein Steuer- und/oder Versorgungssignal des Heizelements (13; 13a, 13b) abhängig von den Temperaturinformationen (T₂₁; T₂₁ₐ, T_{21b}, T₂₃; T₂₃ₐ, T_{23b}) der ersten (21; 21a, 21b) und zweiten (23; 23a, 23b) Temperaturfühler, um die Temperatur des Fluids innerhalb der Heizvorrichtung (1) zu regeln.

14. Verfahren zur Verwaltung der Temperatur nach Anspruch 13, das einen Schritt enthält, in dem das Steuermodul (15) bestimmt, welches Heizelement (13; 13a, 13b) abhängig von den Temperaturinformationen (T₂₁; T₂₁ₐ, T_{21b}, T₂₃; T₂₃ₐ, T_{23b}) der ersten (21; 21a, 21b) und zweiten (23; 23a, 23b) Temperaturfühler aktiviert werden soll.

15. Verfahren zur Verwaltung der Temperatur nach Anspruch 14, wobei das Steuermodul (15) mindestens einen Mikrocontroller und mindestens einen Versorgungsschalter für jedes Heizelement (13; 13a, 13b) enthält, und wobei der Mikrocontroller jeden Versorgungsschalter (17; 17a, 17b) steuert, um das zugeordnete Heizelement (13; 13a, 13b) zu aktivieren oder zu deaktivieren.

## Claims

1. Electric fluid heating device (1) for a motor vehicle, comprising:
- at least one fluid inlet (7),
- at least one fluid outlet (11; 12a, 12b),
- at least one heating element (13; 13a, 13b) for electrically heating the fluid,
- at least one first temperature sensor (21; 21a, 21b) arranged so as to measure the temperature of said at least one heating element (13; 13a, 13b), and
- a control module (15) for said at least one heating element (13; 13a, 13b),
**characterized in that**:
- said device (1) also comprises at least one second temperature sensor (23; 23a, 23b) arranged so as to measure the temperature of the fluid at said at least one outlet (11; 12a, 12b) of said device (1), and **in that**
- the control module (15) comprises at least one processing means (17; 17a, 17b, 19, 35; 35a, 35b) for:
• processing the temperature information (T₂₁; T₂₁ₐ, T_{21b}, T₂₃; T₂₃ₐ, T_{23b}) from the first (21; 21a, 21b) and second (23; 23a, 23b) temperature sensors, and for
• generating a command for said at least one heating element (13; 13a, 13b) as a function of the temperature information (T₂₁; T₂₁ₐ, T_{21b}, T₂₃; T₂₃ₐ, T_{23b}) from the first (21; 21a, 21b) and second (23; 23a, 23b) temperature sensors, so as to regulate the temperature of the fluid in the heating device (1).

2. Device (1) according to Claim 1, wherein said at lest one second temperature sensor (23; 23a, 23b) is moulded on said device (1).

3. Device (1) according to either one of the preceding claims, wherein at least one temperature sensor (21; 21a, 21b; 23; 23a, 23b) comprises a temperature-sensitive element (231).

4. Device (1) according to Claim 3, wherein the temperature-sensitive element (231) of said at least one second temperature sensor (23; 23a, 23b) is arranged so as to be immersed in the fluid when said device (1) is operating.

5. Device (1) according to either of Claims 3 and 4, wherein the temperature-sensitive element (231) is a negative temperature coefficient thermistor.

6. Device (1) according to one of Claims 3 to 5, wherein the temperature-sensitive element of said at least one temperature sensor (21; 21a, 21b; 23; 23a, 23b) is linked electrically to the control module (15).

7. Device (1) according to Claim 6, wherein the control module (15) comprises at least one comparator (35; 35a, 35b) configured to:
- receive, on a first input, a heating setpoint (C; Ca, Cb) and to
- receive, at a second input, electrical information representative of the temperature (T₂₃; T₂₃ₐ, T_{23b}) of the fluid at said at least one outlet (11; 12a, 12b) measured by said at least one second temperature sensor (23; 23a, 23b) .

8. Device (1) according to Claim 7, wherein the comparator (35; 35a, 35b) is configured to compare the electrical information representative of the temperature (T₂₃; T₂₃ₐ, T_{23b}) of the fluid to the heating setpoint (C; Ca, Cb).

9. Device (1) according to Claim 8, wherein at least one processing means (19) of the control module (15) is configured to determine a command and/or power supply signal for said at least one heating element (13; 13a, 13b) as a function of the result of the comparison between the electrical information representative of the temperature (T₂₃; T₂₃ₐ, T_{23b}) of the fluid and the heating setpoint (C; Ca, Cb).

10. Device (1) according to any one of the preceding claims, comprising:
- a first fluid outlet (12a),
- a second fluid outlet (12b),
- a first heating element (13a) linked to the first fluid outlet (12a), configured to electrically heat, to a first temperature, a part of the heat-transfer fluid intended to flow through the first outlet (12a),
- a second heating element (13b) linked to the second fluid outlet (12b), configured to electrically heat, to a second temperature different from the first temperature, another part of the heat-transfer liquid intended to flow through the second outlet (12b),
- for each heating element, a first associated temperature sensor arranged so as to measure the temperature of the associated heating element, and
- for each fluid outlet (12a, 12b), a second associated temperature sensor (23a, 23b) arranged so as to measure the temperature of the fluid at the associated outlet (12a, 12b).

11. Heating circuit (100) of a vehicle interior, **characterized in that** it comprises at least one electric heating device (1) according to any one of the preceding claims.

12. Heating circuit (100) according to Claim 11, wherein the heating device (1) conforms to Claim 11, said circuit (100) also comprising at least one first and one second heat exchanger (103, 104) configured to diffuse heat to two distinct regions of the vehicle interior, and wherein the first fluid outlet (12a) of said device (1) is connected to the first heat exchanger (103), and the second fluid outlet (12b) of said device (1) is connected to the second heat exchanger (104).

13. Method for managing the temperature of a fluid in an electric heating device (1) according to any one of Claims 1 to 10, **characterized in that** said method comprises the following steps:
- each first temperature sensor (21; 21a, 21b) measures the temperature (T₂₁; T₂₁ₐ, T_{21b}) of an associated heating element (13; 13a, 13b),
- each first temperature sensor (21; 21a, 21b) transmits at least one item of electrical information representative of the temperature (T₂₁; T₂₁ₐ, T_{21b}) of the associated heating element (13; 13a, 13b) to the control module (15),
- each second temperature sensor (23; 23a, 23b) measures the temperature of the fluid (T₂₃; T₂₃ₐ, T_{23b}) to at least one associated outlet (11; 12a, 12b) of said device (1),
- each second temperature sensor (23; 23a, 23b) transmits at least one item of electrical information, representative of the temperature of the fluid (T₂₃; T₂₃ₐ, T_{23b}) at said at least one outlet (11; 12a, 12b) of said device (1), to the control module (15),
- the control module (15) determines, for each heating element (13; 13a, 13b), a command and/or power supply signal for the heating element (13; 13a, 13b) as a function of the temperature information (T₂₁; T₂₁ₐ, T_{21b}, T₂₃; T₂₃ₐ, T_{23b}) from the first (21; 21a, 21b) and second (23; 23a, 23b) temperature sensors, so as to regulate the temperature of the fluid in the heating device (1).

14. Method for managing the temperature according to Claim 13, comprising a step in which the control module (15) determines which heating element (13; 13a, 13b) should be activated as a function of the temperature information (T₂₁; T₂₁ₐ, T_{21b}, T₂₃; T₂₃ₐ, T_{23b}) from the first (21; 21a, 21b) and second (23; 23a, 23b) temperature sensors.

15. Method for managing the temperature according to Claim 14, wherein the control module (15) comprises at least one microcontroller and at least one power supply switch for each heating element (13; 13a, 13b), and wherein the microcontroller controls each power supply switch (17; 17a, 17b) so as to activate or deactivate the associated heating element (13; 13a, 13b).
